# EUROPÄISCHE PATENTANMELDUNG

(11) **EP 2 361 831 A2**
(43) Veröffentlichungstag der Anmeldung: **31.08.2011**
(21) Anmeldenummer: 11001246.5
(22) Anmeldetag: 16.02.2011
(51) Int. Cl.: B64D 1/04, F41F 3/06

(54) **Flugkörperabwurfvorrichtung**

(30) Priorität: 20.02.2010 DE 102010008729
(71) Anmelder: Diehl BGT Defence GmbH & Co.KG, 88662 Überlingen (DE)
(72) Erfinder: Fisch, Peter, Gerd, 88662 Überlingen (DE); Hinding, Wilhelm, 88662 Überlingen (DE)
(74) Vertreter: Diehl Patentabteilung

(57) **Zusammenfassung**

Die Erfindung geht aus von einer Abwurfvorrichtung (2) zur Anordnung an einem Luftfahrzeug (6) und zum Abwerfen eines Flugkörpers (4) während eines Flugs des Luftfahrzeugs (6).

Eine einfache Anpassung der Abwurfvorrichtung (2) an eine Vielzahl unterschiedlicher Flugkörper (4) zu erreichen, wird vorgeschlagen, dass die Abwurfvorrichtung (2) zumindest einen Greifer (8, 54, 64) mit zumindest zwei zueinander beweglichen Armen (12, 56, 66) aufweist, die zu einem greifenden Halten des Flugkörpers (4) an dessen Rumpf (28) vorbereitet sind, und ein Abwurfmittel zum Lösen der Arme (12, 56, 66) aus einer greifend arretierten Stellung zum Abwurf des Flugkörpers (4) aufweist.

## Beschreibung

Die Erfindung betrifft eine Abwurfvorrichtung zur Anordnung an einem Luftfahrzeug und zum Abwerfen eines Flugkörpers während eines Flugs das Luftfahrzeugs.

Zur Bekämpfung von Luft- oder Bodenzielen tragen Luftfahrzeuge, also Flugzeuge, Hubschrauber, unbemannte Luftfahrzeuge oder dergleichen, mehrere Flugkörper, die während des Flugs vom Luftfahrzeug gestartet werden. Ja nach Bedrohungs- oder Angriffssituation werden unterschiedliche Flugkörper, wie beispielsweise diverse Lenkflugkörper, gestartet. Die Flugkörper sind jeweils an einer Abwurfvorrichtung am Luftfahrzeug befestigt, die während des Flugs zum Starten des Lenkflugkörpers geöffnet wird, sodass der Flugkörper aus eigener Kraft los fliegen kann oder abgeworfen wird und Im freien Fall sein Triebwerk startet und los fliegt.

Zur Befestigung an einer Abwurfvorrichtung trägt ein Flugkörper an verstärkten Punkten Befestigungsmittel, wie etwa Gleitschuhe, Haken oder Ösen, die in entsprechende Gegenstücke der Abwurfvorrichtung eingreifen. Bauweisebedingt können diese Befestigungspunkte nicht an beliebigen Stellen, sondern nur an dafür geeigneten Stellen am Flugkörper angebracht werden, an denen die Außenhülle des Flugkörpers eine ausreichende Stabilität hat und die nicht an aerodynamisch ungünstigen Stellen liegen.

Es Ist eine Aufgabe der vorliegenden Erfindung, eine Abwurfvorrichtung anzugeben, die geringe Designanforderungen an den Flugkörper stellt und mit der der Flugkörper zuverlässig gehalten und abgeworfen werden kann.

Diese Aufgabe wird durch eine Abwurfvorrichtung der eingangs genannten Art gelöst, die erfindungsgemäß zumindest einen Greifer mit zumindest zwei zueinander beweglichen Armen aufweist, die zu einem greifenden Halten des Flugkörpers an dessen Rumpf vorbereitet sind. Zum Lösen der Arme aus einer greifend arretierten Stellung ist ein Abwurfmittel vorhanden zum Abwurf des Flugkörpers. Durch das greifende Halten des Flugkörpers direkt an dessen Rumpf kann auf die Anordnung von speziellen Befestigungsmitteln am Flugkörper verzichtet werden. Das Design wird durch geringere Anforderungen hinsichtlich einer Außenhautverstärkung für Befestigungsmittel und geringerer aerodynamischer Störungen erleichtert. Der Flugkörper kann konsequenter auf Leistungsfähigkeit ausgelegt werden, da die äußeren Zwänge der Befestigungselemente sowie deren Gewicht entfallen. Es können so auf den Anwendungsfall besser angepasste Flugkörper bereitgestellt werden. Dadurch dass der Flugkörper von den Armen umgriffen wird, kann der Flugkörper an großen Kontaktflächen schonend gehalten werden. So ist es beispielsweise möglich, insbesondere einen Lenkflugkörper auch an empfindlichen Stellen, wie dem Triebwerk, in dem der rissempfindliche Trelbsatz liegt, zu halten, ebenso am Gefechtskopf oder am Näherungszünder.

Die Abwurfvorrichtung ist an einem Luftfahrzeug angeordnet. Dies beinhaltet sowohl eine Anordnung außen am Luftfahrzeug, z.B. unterhalb eines Flügels, als auch eine Anordnung Innerhalb des Luftfahrzeugs, z.B, in einem Waffenschacht, der vor einem Abwurf des Flugkörpers aus Gründen der Tamung nach außen verschlossen ist.

Nachfolgend wird stets von einer Abwurfvorrichtung in Zusammenhang mit Lenkflugkörpern gesprochen, ohne dass jedoch eine Beschränkung auf lenkbare Flugkörper erfolgen soll.

Die Arme des Greifers sind zweckmäßigerweise zum Greifen des Rumpfs an einem zylinderförmigen Bereich des Rumpfs vorbereitet, insbesondere direkt an der zylinderförmigen Außenhaut des Lankflugkörpers. Sie umgreifen den Rumpf vorteilhafterweise um zumindest 270° Grad, insbesondere um zumindest 330° Grad. Der Durchmesser eines gegriffenen Lenkflugkörpers beträgt vorteilhafterweise zumindest 5 cm. Die Arme können eine Zange zum Halten des Lenkflugkörpers bilden. Das Greifen kann durch ein klemmendes Halten an der Außenhaut geschehen. Die Arme können spiegelsymmetrisch zueinander ausgebildet sein, wodurch ein ausgewogenes Halten erreichbar ist. Die Arme sind zweckmäßigerweise schwenkbar zueinander, Insbesondere um eine gemeinsame Drehachse. Es Ist auch denkbar, dass die Arme um zwei - vorzugsweise parallele - Drehachsen zueinander schwenkbar sind. Durch die Zuordnung einer eigenen Drehachse zu jedem Arm kann auch bei einem etwaigen Defekt der Ansteuerung einer Drehachse eines Arms über den weiteren Arm mit eigener Drehachse ein zuverlässiges Halten eines Lenkflugkörpers sichergestellt werden. Auch ist es beim Vorsehen eigener Drehachsen für die Arme designtechnisch leicht möglich, den Greifer so auszugestalten, dass oberhalb der Arme zwischen den Drehachsen noch Bauraum für andere elektronische oder mechanische Vorrichtungen besteht.

Um ein Herausrutschen des Lenkflugkörpers in Längsrichtung des Lenkflugkörpers zu verhindern, ist zweckmäßigerweise ein Formschlussmittel vorhanden, das einen Formschluss vom Greifer mit dem Lenkflugkörper In Längsrichtung des Lenkflugkörpers herstellt. So kann der Greifer beispielsweise eine Ausnehmung zum Umgreifen einer vom Rumpf, insbesondere vom zylinderförmigen Rumpf, abstehenden Ausformung aufweisen. Die Ausnehmung ist vorteilhafterweise so im Greifer angeordnet, dass sie bei einer Öffnungsbewegung der Arme relativ zum Rumpf des Lankflugkörpers ruhend verbleibt.

Zum Freigeben des Lenkflugkörpers aus der gehaltenen Position werden die Arme zweckmäßigerweise schnell geöffnet, um ein Verkanten oder beziehungsweise ein Entlangrutschen des Lenkflugkörpers in oder an den Armen zu vermeiden. Hierzu umfasst die Abwurfvorrichtung bzw. das Abwurfmiftel zweckmäßigerweise ein Mittel zum ruckartigen Öffnen der Arme. Das Mittel kann eine Feder zum Auseinandertreiben der Arme aufweisen, das zweckmäßigerweise In der greifend arretierten Stellung der Arme in Richtung einer Öffnungsbewegung vorgespannt ist. Eine hohe Sicherheit beim Halten des Lenkflugkörpers kann erreicht werden, wenn das Mittel ein Motor ist, der mit einem entsprechenden Signal eines Steuermittels angesteuert wird und der auf das Signal hin die Arme öffnet.

Zum sicheren Halten des Lenkflugkörpers sind zweckmäßigerweise zumindest zwei wie oben beschriebene Greifer vorhanden, die den Lenkflugkörper an verschiedenen Stellen umgreifend halten. Um unterschiedlich große Lenkflugkörper stabil halten zu können, ist es. vorteilhaft, wenn der Abstand zwischen den Greifern einstellbar ist, sodass Lenkflugkörper unterschiedlicher Länge und Konfiguration gehalten werden können. Vorteilhafterweise umfasst die Abwurfvorrichtung ein Rückgrat, an den der Greifer und ein weiterer Greifer befestigt sind, das ein Mittel zum insbesondere stufenlosen Einstellen eines Abstands in Längsrichtung des Lenkflugkörpers der Greifer zueinander aufweist. So können die Greifer zueinander verschisblich sein und an jeweils einer vorteilhaften Stelle des Lenkflugkörpers angesetzt werden.

Zum Starten des Lenkflugkörpers werden vorteilhafterweise Daten vom Luftfahrzeug an den Lenkflugkörper übertragen. Hierzu ist der Lankflugkörper zweckmäßigerweise mittels Datenschnittstelle signaltechnisch und vorteilhafterweise auch mechanisch mit der Abwurfvorrichtung verbunden. Umfasst die Abwurfvorrichtung eine Datenschnittstelle zur mechanischen Verbindung mit einer entsprechenden Schnittstelle des Lenkflugkörpers und ist ein Positionsmittel zum wählbaren Anordnen der Datenschnittstelle relativ zum Greifer vorhanden, so können unterschiedliche Lenkflugkörper, bei denen die entsprechenden Schnittstellen an unterschiedlichen Stellen sind, leicht und sicher datentechnisch mit der Abwurfvorrichtung verbunden werden. Zweckmäßigerweise ist die Datenschnittstelle verschiebbar am Rückgrat befestigt, sodass deren Position kontinuierlich in Längsrichtung des Lenkflugkörpers versteilt werden kann.

Durch die Greifertechnik ist es möglich, unterschiedlich dicke Lenkflugkörper, also Lenkflugkörper mit unterschiedlichen Rumpfdurchmessern, sicher zu halten. Die Halterung unterschiedlich dicker Lenkflugkörper kann weiter verbessert werden, wenn zwischen dem Greifer und dem Lenkflugkörper eine Einlage angeordnet Ist, die vorteilhafterweise mit Ihrer Inneren Kontur an den Lenkflugkörper und ihrer äußeren Kontur an den Greifer angepasst ist. Die Einlage Ist zweckmäßigerweise mit einem Befestigungsmittel zum Befestigen innerhalb der Arme ausgestattet, sodass die Arme die Einlage bei einem Schließen gegen den Flugkörper drücken.

Eine Außenhaut schonende und großflächige Anlage am Lenkflugkörper kann auf diese Weise auch dann erreicht werden, wenn die Arme alleine zu einer solchen Anlage nicht geeignet sind. Außerdem kann ein sicheres Halten eines besonders dicken Lenkflugkörpers erreicht werden, der von den Armen nicht vollständig umgriffen werden kann. Die Anpassung zwischen Greifer und Einlage und zwischen Einlage und Lenkflugkörper kann so geschehen, dass diese Elemente flächig aufeinanderliegen. Die Arme umgreifen die Einlage insbesondere beidseitig von außen In flächigem Kontakt. Die Einlage hat vorteilhafterweise eine zumindest Im Wesentlichen zylinderförmige. Innenkontur - wobei eine zumindest sechseckige Polygonstruktur ausreichend ist - und eine Außenkontur, die an die Innenkontur der Arme In greifend arretierter Stellung angepasst ist.

Eine Drurkvertellung am Lenkflugkörper kann weiter verbessert werden, wenn die Einlage in Längsrichtung des Lenkflugkörpers länger als die Arme ist. So kann die Einlage beispielsweise beidseitig über die Arme hinausragen.

Die Einlage ist zweckmäßigerweise ganz oder teilweise aus Kunststoff hergestellt, wobei unter Kunststoff ein polymerer Werkstoff, Gummi oder dergleichen verstanden werden kann. Die Einlagen kann aus Verbundwerkstoff mit Kunststoff und einer Metallschicht gefertigt sein, wodurch sie besonders stabil und den Lenkflugkörper sicher haltend ausgeführt ist.

Eine Vielzahl unterschiedlich dicker und schwerer Lenkflugkörper kann mit einem System aus der Abwurfvorrichtung und mehreren unterschiedlich großen Einlagen gehalten werden. Durch die Wahl einer Einlage, die an den jeweiligen Flugkörper angepasst ist, also an dessen Außengeometrie, insbesondere zur flächigen Anlage an dessen Außenhaut, kann die Abwurfvorrichtung schnell und mit einfachen Mitteln an den jeweiligen Lenkflugkörper angepasst werden. Zweckmäßigerweise sind die unterschiedlich großen Einlagen mit unterschiedlich großen zylindrischen Innenkonturen versehen, sodass jede Einlage ihre eigene und an einen Lenkflugkörper angepasste zylindrische Innenkontur hat. Die Einlagen sind vorteilhafterweise jeweils mit ihrer Außenkontur an die Innenkontur der Arme angepasst.

Beim Abwurf des Lenkflugkörpers während des Flugs können unter Umständen große aerodynamische Drücke am Lenkflugkörper wirken. Deshalb ist es vorteilhaft, wenn der Lenkflugkörper schnell vom Greifer entfernt wird. Hierzu umfasst die Abwurfvorrichtung zweckmäßigerweise ein Wirkelement zum angetriebenen Ausstoßen des Lenkflugkörpers aus den Armen. Das Wirkelement kann ein pyrotechnisches Element sein oder einen Federmechanismus enthalten. Durch das Ausstoßen wird der Lenkflugkörper aus den Armen herausgedrückt, insbesondere symmetrisch zu den beiden Armen.

In einer weiteren vorteilhaften Ausführungsform der Erfindung wird vorgeschlagen, dass die Abwurfvorrichtung ein Druckmittel zum Einstellen eines Anpressdrucks der Arme in Schließrichtung an den Lenkflugkörper in einer greifend arretierten Stellung der Arme aufweist. Hierdurch kann eine Druckkraft beim gehaltenen Lenkflugkörper an den entsprechenden Lenkflugkörper eingestellt werden, z.B. kann ein schwerer Lenkflugkörper mit einer hohen Druckkraft und ein leichter Lenkflugkörper mit einer geringen Druckkraft gehalten werden. Außerdem kann der Anpressdruck an unterschiedliche Anforderungen unterschiedlicher Positionen am Lenkflugkörper angepasst werden. So kann der Anpressdruck eines Greifers größer gewählt werden als bei einem zweiten Greifer, der den Lenkflugkörper z.B. an einer empfindlicheren Stelle hält.

Der Anpressdruck kann mittels eines Motors oder manuell einstellbar sein, beispielsweise über einen Gewindetrieb. Vorteilhafterweise ist ein Steuermittel vorhanden, dass zum Steuern des Motors und des Anpressdrucks vorbereitet Ist, beispielsweise in Abhängigkeit vom Öffnungswinkel der Arme in der greifend arretierten Stellung. Ist die greifend arretierte Stellung bei einem großen Öffnungswinkel, so kann der Anpressdruck automatisch höher gewählt werden, da davon auszugehen ist, dass ein größerer und schwerer Lenkflugkörper gehalten werden muss.

Um ein unbeabsichtigtes Öffnen des Greifers zu verhindern, umfasst die Abwurfvorrichtung zweckmäßigerweise ein Sicherungsmittel zum Blockieren einer Öffnungsbewegung der Arme. Hierbei ist es vorteilhaft, wenn der Öffnungswinkel, in dem die Arme blockiert gehalten werden, einstellbar ist. Auf diese Weise kann die Haltestellung der Arme an verschieden große Lenkflugkörper einfach angepasst werden. Die Einstellbarkeit kann durch Rasten in verschiedenen Stufen, einen Sicherungsstift der in verschiedene Positionen einsteckbar ist, oder durch andere Mittel erreicht werden.

Die Variabilität der Abwurfvorrichtung hinsichtlich des Haltens unterschiedlicher Lenkflugkörper kann weiter erhöht werden, wenn die Arme jeweils aus zumindest zwei zueinander beweglichen Gliedern zusammengesetzt sind, durch deren einzeine Bewegung jeweils der Öffnungswinkel eines Arms zum anderen einstellbar ist. Analog zu Fingergliedern einer Hand kann der Radius eingestellt werden, mit denen die Arme den Lenkflugkörper umgreifen. Die Glieder können einzeln angesteuert sein, beispielsweise durch einen Motor, insbesondere automatisch mit Hilfe eines Steuermittels, das zum Ansteuern der Motoren, Insbesondere separat jedes einzelnen Motors, vorbereitet ist.

Alternativ oder zusätzlich Ist es vorteilhaft, wenn der Greifer mit mehreren austauschbaren Armen ausgestattet ist, die zweckmäßigerweise an unterschiedliche Radien von Zylindern angepasste Innenkonturen aufweisen. So können in Abhängigkeit zum zu haltenden Lenkflugkörper Arme ausgewählt und mit dem Greifer verbunden werden, beispielsweise in den Greifer eingesteckt werden, sodass der Greifer an den entsprechenden Lenkflugkörper angepasst Ist.

Beim Abwerfen des Lenkflugkörpers aus dem Greifer mit Hilfe eines Wirkmittels ist es vorteilhaft, wenn das Auslösen des Wirkmittels mit einem Öffnen der Arme zeitlich koordiniert ist. Hierzu betrifft die Erfindung außerdem ein Verfahren zum Abwerfen eines Flugkörpers, bevorzugt eines Lenkftugkörpers, von einem fliegenden Luftfahrzeug, insbesondere mit einer Abwurfvorrichtung nach einem der Ansprüche 1 bis 9. Erfindungsgemäß wird eine Arretierung von Armen eines Greifers, die den Rumpf des Flugkörpers, insbesondere in einem zylinderförmigen Bereich, in einer von einem Sicherungsmittel arretiert gehaltenen Stellung halten, auf ein Abwurfsignal hin gelöst, die Arme werden geöffnet und der Flugkörper wird durch ein Wirkmittel aus den Armen harausgedrückt. Das Öffnen der Arme und das Herausdrücken des Flugkörpers aus den Armen sind hierbei mechanisch miteinander gekoppelt.

So kann in einer Ausführungsvariante die Energie des Wirkmittels die Arme auseinanderdrücken, sodass zuerst das Wirkmittel ausgelöst wird und dieses den Flugkörper aus den Armen herausdrückt und hierdurch die Arme, die bereits vorher entsichert wurden, auseinandergedrückt werden und den Flugkörper freigeben. Eine andere Ausführungsvariante sieht vor, dass zuerst die Arme geöffnet werden und das Wirkmittel bei einer vorgegebenen Öffnungsstellung oder einer vorgegebenen erfolgten Öffnungsbewegung ausgelöst wird.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine Abwurfvorrichtung für Lenkflugkörper mit zwei Greifern, die in einem offenen und in einem den Lankflugkörper umgreifenden Zustand dargestellt sind,
- Fig. 2: die beiden Greifer und einen Ausschnitt des Lenkflugkörpers von der Seite,
- Fig. 3: einen der Greifer von vorne mit drei verschiedenen Lenkflugkörpern, die durch unterschiedliche Einlagen im Greifer gehalten sind,

- Fig. 4: den Greifer, der einen Lenkflugkörper an einem Hanger greift, einmal ohne und einmal mit Einlagen,
- Fig. 5: einen alternativen Greifer mit selbständig beweglichen Gliedern zum Anpassen seines Radius an unterschiedliche Lenkflugkörper und
- Fig. 6: einen weiteren alternativen Greifer mit Armen mit jeweils eigener Drehachse.

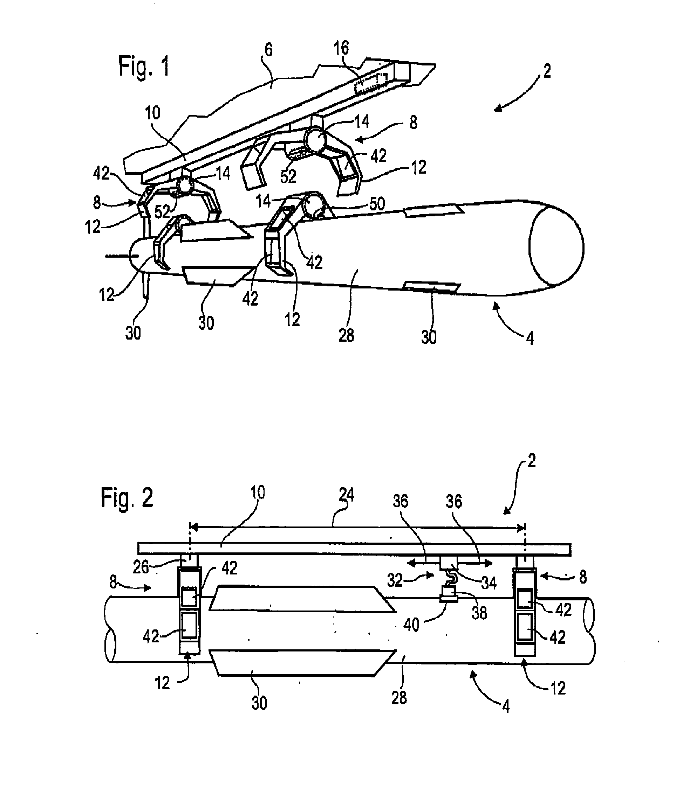

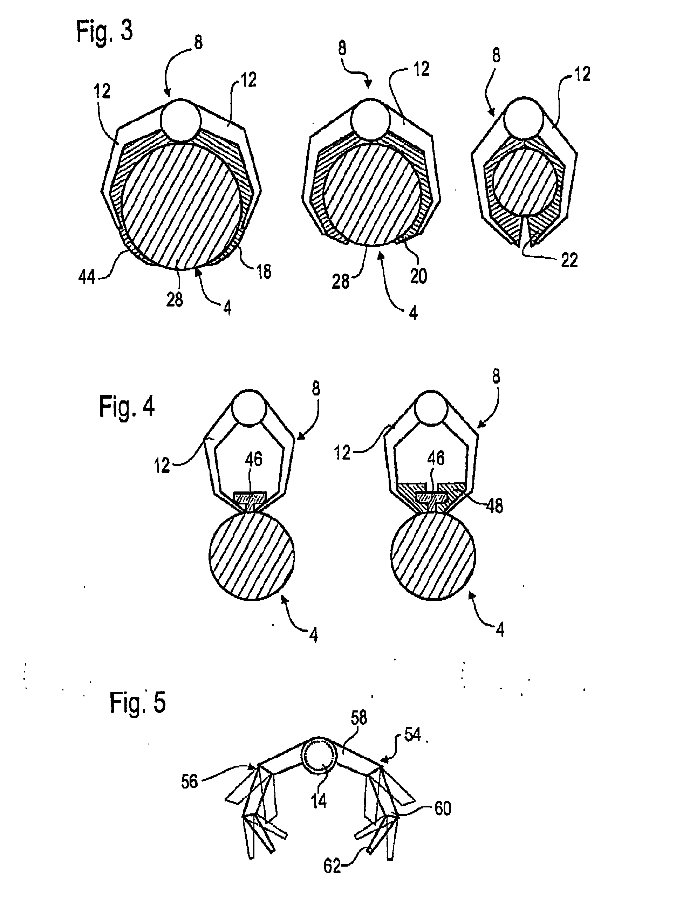

Figur 1 zeigt eine Abwurfvorrichtung 2 zum Abwerfen unterschiedlicher Lenkflugkörper 4 von einem Luftfahrzeug 6, das in Figur 1 nur angedeutet ist, Die Abwurfvorrichtung 2 umfasst zwei Greifer 8, die an einem Rückgrat 10 hängen, das an einer Unterseite des Luftfahrzeugs 6 befestigt ist. Die Greifer 8 sind In Figur 1 in zwei unterschiedlichen Zuständen dargestellt. Oben und am Rückgrat 10 hängend sind die Arme 12 der Greifer 8 weit geöffnet, sodass der Lenkflugkörper 4 von unten zwischen die Arme 12 eingeführt werden kann. Mit Hilfe eines Motors 14 in jedem Greifer 8, die von einem Steuermittel 16 im Rückgrat 10 oder im Luftfahrzeug 6 angesteuert werden, werden die Arme 12 dann geschlossen, sodass sie beispielsweise direkt oder über in Figur 3 gezeigte Einlagen 18, 20, 22 am Lenkflugkörper 4 anliegen. Diese Stellung der Arme 12 ist in der unteren Darstellung der beiden Greifer 8 in Figur 1 gezeigt.

Figur 2 zeigt einen Ausschnitt des Lenkflugkörpers 4 und die Abwurfvorrichtung 2 von der Seite. Zur Anpassung an unterschiedliche Lenkflugkörper 4 ist ein Abstand 24 zwischen den beiden Greifern stufenlos einstellbar, indem die beiden Greifer 8 über Mittel 26 am Rückgrat 10 befestigt sind, beispielsweise Schieber, die am Rückgrat 10 entlang gleiten und an jeder Stelle des Rückgrats 10 arretierbar sind. Hierdurch können die Greifer 8 so am zylinderförmigen Rumpf 28 platziert werden, den sie direkt umgreifen, dass sie vor oder hinter Flügein 30 den Rumpf 28 so einspannen können, dass der Lenkflugkörper 10 ausgewogen in der Abwurfvorrichtung 2 hängt.

Die Abwurfvorrichtung 2 umfasst außerdem eine Datenschnittstelle 32 mit einem Schieber 34, der ebenfalls In Längsrichtung 38 des Lenkflugkörpers 4 entlang des Rückgrats 10 verschiebbar gelagert ist. Über ein kurzes Kabel ist ein Stecker 38 datentechnisch mit dem Schieber 34 und hierdurch mit dem Steuermittel 16 verbunden, der in eine entsprechende Schnittstelle 40 des Lenkflugkörpers 4 eingesteckt werden kann. Auf diese Weise können Lenkflugkörper 4 mit Schnittstellen 40 an unterschiedlichen Stellen in einfacher Weise mit dem Steuermittel 16 verbunden werden.

Um ein Verschieben des Rumpfs 28 in Längsrichtung 36 in den Greifern 8 zu verhindern, sind diese mit einer nicht dargestellten Bohrung versehen, in die ein nicht dargestellter Stift, der vom zylinderförmigen Rumpf 28 herausragt, eingreift. Die Ausnehmung ist in ein mittleres Segment 50 des Greifers 8 zwischen den beiden Armen 12 eingebracht, sodass sie bei einem Öffnen oder Schließen der Arme 12 relativ zum Rumpf 28 unbeweglich verbleibt. Der Bolzen kann von unten in die Ausnehmung des Greifers 8 eingeführt werden und die Arme 12 können geschlossen werden. Umgekehrt können die Arme 12 geöffnet werden und der Lenkflugkörper 4 fällt nach unten heraus und der Bolzen löst sich aus der Ausnehmung heraus.

In Figur 3 Ist dargestellt, wie einer der Greifer 8 drei unterschiedliche Lenkflugkörper 4 mit Hilfe unterschiedlichen Einlagen 18, 20, 22 hält. Der Greifer 8 ist von vorne dargestellt, wobei sowohl die Lenkflugkörper 4 als auch die Einlagen 18, 20, 22 geschnitten dargestellt sind. Die Einlagen 18, 20, 22 ragen beidseitig, also nach vorne und nach hinten, über den Greifer 8 hinaus, sodass durch sie eine große Anlagefläche am Rumpf 28 des Lenkflugkörpers 4 entsteht.

In der linken Darstellung der Figur 3 wird ein sehr großer Lenkflugkörper 4 mit einem großen zylindrischen Durchmesser vom Greifer 8 gehalten. Hierzu wird in jeden Arm 12 des Greifers 8 jeweils eine Einlage 18 eingerastet, deren Außenkontur so ausgestaltet ist, dass sie In Öffnungen 42 der Arme eingerastet werden können. Bei geöffneten Armen 12 und nicht eingeklemmtem Lenkflugkörper 4 sind die Einlagen 18 hierdurch fest am Greifer 8 befestigt, sodass der Lenkflugkörper 4 nun von unten zwischen die Arme 12 eingeführt werden kann und die Arme mit Hilfe des Motors 14 geschlossen werden können. Hierdurch legen sich die zylinderförmigen Innenflächen der beiden Einlagen 18 großflächig an den Rumpf 28 des Lenkflugkörpers 4 an und halten diesen sicher zwischen den beiden Armen 12. Da der Rumpf 28 sehr groß ist und nach unten ein Stück weit über die Arme 12 hinausragt, sind auch die Einlagen über die Arme 12 nach unten hinausragend so ausgeführt, dass ein Herausrutschen des Lankflugkörpers 4 aus den Armen 12 nach unten sicher verhindert wird.

Die Einlagen 18, 20, 22 sind aus einem Verbundwarkstoff aus Kunststoff und Metall hergestellt, der einerseits sehr formstabil ist, sodass die unteren Enden 44 der Einlagen 18 sehr stabil sind und den Lenkflugkörper 4 sicher halten. Andererseits sind die Innenflächen vollständig aus Kunststoff ausgeführt, sodass die Oberfläche des Rumpfs 28 auch bei einem Verschieben innerhalb der Einlagen 18 nicht verkratzt.

Bei der mittleren Darstellung aus Figur 3 wird ein etwas kleinerer Lankflugkörper 4 mit einem kleineren zylindrischen Rumpf 28 von den Armen 12 gehalten. Auch hier ist die Innenfläche der Einlage 20 zylindrisch ausgeführt und an den Durchmesser des Lenkflugkörpers 4 angepasst. Wie die Einlagen 18 und 22 ist auch die Einlage 20 in die Öffnungen 42 der Arme 12 eingerastet und kann nach Gebrauch durch ein Spezialwerkzeug oder per Hand mit einem Druck von außen aus den Armen 12 gelöst werden, sodass andere Einlagen in die Arme 12 einfügbar sind.

Die rechte Zeichnung aus Figur 3 zeigt, wie der Greifer 8 einen sehr dünnen Rumpf 28 hält, der fast vollständig von den Einlagen 22 und den Armen 12 umgriffen wird.

Figur 4 zeigt weitere Beispiele zum Halten von Lenkflugkörpern 4, die einen so genannten Hanger 46 tragen. Die Greifer 8 sind auch zum Einklemmen der Hanger 46 geeignet, entweder direkt wie auf der linken Darstellung von Figur 4 gezeigt wird, oder über Einlagen 48, die um den Hanger 46 gelegt sind, und einen hohen Anpressdruck der Arme 12 an den Hanger 46 erlauben, ohne dass eine Materialverformung an den Armen 12 oder am Hanger 46 auftritt.

Zum Halten des Lankflugkörpers 4 durch die Greifer 8 werden die Arme 12 um den Lenkflugkörper 8 gelegt, beispielsweise wie in Figur 1 dargestellt ist. Über den Motor 14 kann nun mit Hilfe des Steuermittels 18 der Anpressdruck der Arme 12 am Rumpf 28 eingestellt werden. Der Anpressdruck kann dem Steuermittel 16 von außen vorgegeben werden oder das Steuermittel 16 errechnet den Anpressdruck selbständig, beispielsweise anhand des Öffnungswinkels der an den Rumpf 28 angelegten Arme 12.

Nachdem der Anpressdruck eingestellt ist, wird ein nicht dargestelltes Sicherungsmittel so zwischen das zentrale Segment 50 und die Arme 12 eingefügt, dass diese blockiert sind und auch bei einer motorischen Betätigung des Motors 14 nicht geöffnet werden können. Das Sicherungsmittel kann ein Sicherungsstift sein, der die Arme 12 in verschiedenen Öffnungswinkeln zum zentralen Segment 50 bzw. Rückgrat 10. blockieren kann. Der Lenkflugkörper 4 ist nun befestigt und das Luftfahrzeug 6 kann starten.

Während eines Flugs des Luftfahrzeugs 6 soll der Lenkflugkörper 4 abgeworfen werden. Hierzu wird ein Abwurfsignal von dem Steuermittel 16 an die Greifer 8 weitergegeben, sodass der Motor 14 die Sicherungsmittel lösen kann. Die Arme 12 sind dennoch fest am Rumpf 28 gehalten, sodass dieser weiterhin zwischen den Armen 12 eingeklemmt bleibt. Auf ein weiteres Signal des Steuermittels 16 hin öffnen die Arme 12 ruckartig, angetrieben durch den Motor 14, sodass der Lenkflugkörper 4 freigegeben Ist. Er fällt nach unten heraus, sodass das Kabel zwischen dem Stecker 38 und dem Positionsmittel 34 abreißt oder der Stecker 38 aus der Schnittstelle 40 herausgezogen wird. Dies wird vom Lenkflugköper 4 registriert, der daraufhin sein Triebwerk startet und selbständig einem Ziel entgegenfliegt.

Zum beschleunigten Abwerfen des Lenkflugkörpers 4 vom Luftfahrzeug 6 können die Greifer Jeweils ein Wirkmittel 52, beispielsweise in Form einer pyrotechnischen Treibladung, enthalten, die nach einem Auslösen einen Druck auf den Lenkflugkörper 4 nach unten ausübt, sodass er nach unten aus den Armen 12 herausgedrückt wird und diese so schneller verlässt. Zum Abwerfen des Lenkflugkörpers 4 kann das Steuermittel 16 ein Signal an die Wirkmittel 52 geben, sodass diese Auslösen, noch während die Arme 12 geschlossen sind. Durch den starken Druck auf den Lenkflugkörper 4 werden die noch geschlossenen aber entsicherten Arme 12 auseinandergedrückt, sodass sie den Lenkflugkörper 4 freigeben. Hierdurch wird eine sehr koordinierte Öffnungsbewegung der Arme 12 und des Auslösens der Wirkmittel 52 erreicht. Alternativ können zunächst auf das Signal des Steuermittels 16 hin die Arme 12 öffnen und nach einer festgelegten Zeitspanne nach dem Öffnungssignal die Wirkmittel 52 auslösen. Ebenfalls ist es möglich, das Auslösen der Wirkmittel 52 an einen Öffnungswinkel der Arme 12 zu koppeln.

Der Motor 14 bildet ein Abwurfmittel zum Lösen der Arme 12 aus einer greifend arretierten Stellung und zum Abwurf des Lenkflugkörpers. Das Steuermittel 16 und das Wirkmittel 52 können ebenfalls Bestandteile des Abwurfmittels sein.

Eine weitere Ausführungsform eines Greifers 54 ist in Figur 5 dargestellt. Die Arme 56 des Greifers 54 bestehen aus drei Gliedern 58, 60, 62, die zueinander beweglich sind. So kann das unterste Glied 62 separat vom mittleren Glied 60 und dieses separat vom obersten Glied 58 bewegt werden, wie durch die gestrichelten Positionen angedeutet ist. Das Glied 62 kann mit dem Glied 60 durch einen ratschenartigen Mechanismus verbunden sein, sodass das untere Glied 62 bei einem Drücken zum Lenkflugkörper 4 hin in mehreren Positionen einrastet und nicht wieder nach außen bewegt werden kann. In gleicher Weise kann das mittlere Glied 60 am oberen Glied 58 befestigt sein. Auf diese Weise können die beiden unteren Glieder 62 und die beiden mittleren Glieder 60 des Greifers 54 an den Rumpf 28 des Lenkflugkörpers angeschmiegt werden, sodass die Arme 56 Im Wesentlichen den Radius des Rumpfs 28 nachbilden. Anschließend kann durch den Motor 14 eine Anpresskraft der Arme 56 an den Rumpf 28 bewirkt werden, indem die oberen Glieder 58 motorisch ein Stück weit geschlossen werden, bis die Arme 58 mit dem gewünschten Anpressdruck am Rumpf 28 anliegen.

Alternativ können unterschiedliche Glieder 60, 62 In die Glieder 58 eingesteckt werden, z.B. In festen und nicht variablen Positionen der Glieder 58, 60, 62 zueinander. Eine Anpassung des Greifers 54 an unterschiedliche Lenkflugkörper kann so durch die Wahl entsprechend vorgeformter Glieder 60, 62 erreicht werden, deren Form an die Außenform unterschiedlicher Lenkflugkörper angepasst ist. Die Glieder 60, 62 werden rastend In die Glieder 58 eingeführt und die Arme 56 werden durch den Motor 14 geschlossen und an den Rumpf 28 angepresst.

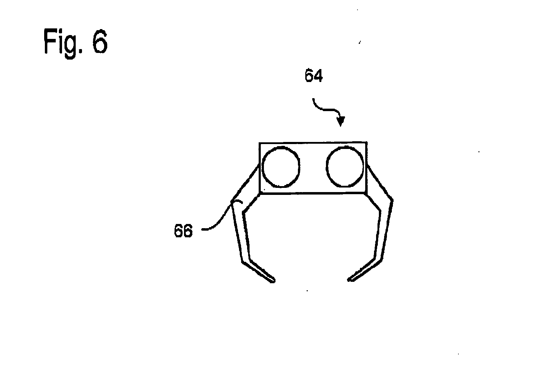

Noch eine weitere Ausführungsform eines Greifers 64 Ist In Fig. 6 gezeigt. Die Arme 66 des Greifers 64 weisen jeweils eine eigene Drehachse auf, um die sie unabhängig voneinander verschwenkt werden können.

### Bezugszeichenliste

- 2: Abwurfvorrichtung
- 4: Lenkflugkörper
- 6: Luftfahrzeug
- 8: Greifer
- 10: Rückgrat
- 12: Arm
- 14: Motor
- 16: Steuermittel
- 18: Einlage
- 20: Einlage
- 22: Einlage
- 24: Abstand
- 26: Mittel
- 28: Rumpf
- 30: Flügel
- 32: Datenschnittstelle
- 34: Positionsmittel
- 36: Längsrichtung
- 38: Stecker
- 40: Schnittstelle
- 42: Öffnung
- 44: Ende
- 46: Hanger
- 48: Einlage
- 50: Segment
- 52: Wirkmittel
- 54: Greifer
- 56: Arm
- 58: Glied
- 60: Glied
- 62: Glied
- 64: Greifer
- 66: Arm

## Patentansprüche

1. Abwurfvorrichtung (2) zur Anordnung an einem Luftfahrzeug (6) und zum Abwerfen eines Flugkörpers (4) während eines Flugs des Luftfahrzeugs (6) mit zumindest einem Greifer (8, 54, 64) mit zumindest zwei zueinander beweglichen Armen (12, 56, 66), die zu einem greifenden Halten des Flugkörpers (4) an dessen Rumpf (28) vorbereitet sind, und einem Abwurfmittel zum Lösen der Arme (12, 56, 66) aus einer greifend arretierten Stellung zum Abwurf des Flugkörpers (4),

2. Abwurfvorrichtung (2) nach Anspruch 1,
**gekennzeichnet,**
**durch** ein Rückgrat (10), an dem der Greifer (6, 54, 64) und ein weiterer Greifer (8, 54, 64) befestigt sind, das ein Mittel (26) zum Einstellen eines Abstands (24) in Längsrichtung (36) des Flugkörpers (4) der Greifer (8, 54, 64) zueinander aufweist.

3. Abwurfvorrichtung (2) nach Anspruch 1 oder 2,
**gekennzeichnet,**
**durch** eine Datenschnittstelle (38) zur mechanischen Verbindung mit einer entsprechenden Schnittstelle (40) des Flugkörpers (4) und ein Positionsmittel (34) zum wählbaren Anordnen der Datenschnittstelle (38) relativ zum Greifer (8, 54, 64).

4. Abwurfvorrichtung (2) nach einem der vorhergehenden Ansprüche, **gekennzeichnet,**
**durch** eine Einlage (18, 20, 22) mit einem Befestigungsmittel zum Befestigen
innerhalb der Arme (12, 56, 66), so dass die Arme (12, 56, 66) die Einlage (18, 20, 22) bei einem Schließen gegen den gehaltenen Flugkörper (4) drücken.

5. Abwurfvorrichtung (2) nach einem der vorhergehenden Ansprüche,
**gekennzeichnet,**
**durch** mehrere unterschiedlich große Einlagen (18, 20, 22) mit an die Innenkontur der Arme (12, 56, 66) angepassten Außenkonturen.

6. Abwurfvorrichtung (2) nach einem der vorhergehenden Ansprüche,
**gekennzeichnet,**
**durch** ein Wirkelement (52) zum angetriebenen Ausstoßen des Flugkörpers (4) aus den Armen (12, 56, 66) enthält.

7. Abwurfvorrichtung (2) nach einem der vorhergehenden Ansprüche,
**gekennzeichnet,**
**durch** ein Druckmittel zum Einstellen eines Anpressdrucks der Arme (12, 56, 66) in Schließrichtung an den Flugkörper (4) in einer greifend arretierten stellung der Arme (12, 56, 66).

8. Abwurfvorrichtung (2) nach einem der vorhergehenden Ansprüche,
**gekennzeichnet,**
**durch** ein Sicherungsmittel zum Blockieren einer Öffnungsbewegung der Arme (12, 56, 66), wobei der Öffnungswinkel, in dem die Arme (12, 56, 66) blockiert gehalten werden, einstellbar ist.

9. Abwurfvorrichtung (2) nach einem der vorhergehenden Ansprüche,
**dadurch gekennzeichnet,**
**dass** die Arme (56) Jeweils aus zumindest zwei zueinander beweglichen Gliedern (56, 60, 62) zusammengesetzt sind, durch deren einzelne Bewegung jeweils der Öffnungswinkel eines Arms (56) zum anderen einstellbar ist.

10. Verfahren zum Abwerfen eines Flugkörpers (4) von einem fliegenden Luftfahrzeug (6), bei dem Arme (12, 56, 66) eines Greifers (8, 54, 64) den Rumpf (28) des Flugkörpers (4) in einer arretierten Steilung halten, auf ein Abwurfsignal hin eine von einem Sicherungsmittel gehaltene Arretierung der Arme (12, 56, 66) gelöst wird, die Arme (12, 56, 66) geöffnet werden und der Flugkörper (4) durch ein Wirkmittel (52) aus den Armen (12, 56, 66) heraus gedrückt wird, wobei das Öffnen der Arme (12, 56, 66) und das Auslösen des Wirkmittels (52) mechanisch miteinander gekoppelt sind.
